# EUROPÄISCHE PATENTSCHRIFT

(11) **EP 3 300 786 B1**
(45) Veröffentlichungstag und Bekanntmachung des Hinweises auf die Patenterteilung: **08.05.2019**
(21) Anmeldenummer: 17001896.4
(22) Anmeldetag: 02.03.2011
(51) Int. Cl.: B01D 35/153, B01D 35/16, B01D 36/00, F02M 37/22

(54) **FILTERVORRICHTUNG**
FILTER DEVICE
DISPOSITIF DE FILTRE

(30) Priorität: 04.03.2010 DE 102010010304
(43) Veröffentlichungstag der Anmeldung: 04.04.2018
(62) Teilanmeldung aus: 11707590.3
(73) Patentinhaber: Hydac Filtertechnik GmbH, 66280 Sulzbach/Saar (DE)
(72) Erfinder: EBERLE, Richard, 66399 Ormesheim (DE); KREIBIG, Micha, 66663 Merzig-Brotdorf (DE)
(74) Vertreter: Bartels und Partner, Patentanwälte

(56) Entgegenhaltungen:
- DE-A1-102007 009 352
- US-A1- 2010 025 317
- US-B1- 7 335 300

## Beschreibung

Die Erfindung betrifft eine Filtervorrichtung für Fluide, insbesondere für Kraftstoffe wie Dieselöl, mit den Merkmalen von Anspruch 1.

Filtervorrichtungen der oben genannten Art sind bekannt. Solche Filtervorrichtungen werden üblicherweise bei Kraftstoffsystemen für Verbrennungsmotoren eingesetzt, um empfindliche Komponenten, insbesondere Einspritzsysteme, gegen Beeinträchtigungen durch im Kraftstoff mitgeführte Verschmutzungen zu sichern. Um den störungsfreien Betrieb der dem Filter nachgeordneten Systeme über deren gesamte Betriebszeit zu gewährleisten, sind an die Funktionssicherheit der Filtervorrichtung hohe Anforderungen zu stellen. In starkem Maße wird die Funktionssicherheit von den Eigenschaften der Verbindung zwischen Endkappe und Elementaufnahme beeinflusst. Das betreffende Filterelement muss mittels der Elementaufnahme im Filtergehäuse genau positioniert werden; auch ist sicherzustellen, dass eine zuverlässige, sicher abgedichtete Fluidverbindung zum Filterhohlraum gebildet wird. Außerdem muss sichergestellt werden, dass bei den im Laufe der Betriebszeit erforderlichen Wechselvorgängen des Filterelementes die einwandfreie Verbindung zwischen Endkappe und Elementaufnahme beim Einsetzen des neuen Filterelementes verlässlich zustande kommt.

US 2010/025317 A1 offenbart in Übereinstimmung mit Anspruch 1 eine Filtervorrichtung für Fluide, mit einem eine Längsachse definierenden Filtergehäuse, das Gehäuseanschlüsse als Fluideingang und Fluidausgang aufweist und in dem ein Filterelement aufgenommen ist, dessen einen inneren Filterhohlraum umgebendes Filtermedium beim Filtriervorgang durchströmbar ist. Das Filterelement weist an seinem dem Bodenteil des Filtergehäuses zugewandten unteren Ende eine Endkappe auf, die einen eine Fluidverbindung zum inneren Filterhohlraum bildenden Durchgang aufweist und an einer Elementaufnahme gegenüber dem Filtergehäuse festlegbar ist. Die Elementaufnahme weist ein am Filtergehäuse befindliches, zum Filterelement hin offenes Aufnahmeteil auf, in dem ein zu einem Gehäuseanschluss führender Fluidkanal mündet, wobei die Endkappe des Filterelementes einen Anschlussstutzen aufweist, der im Aufnahmeteil aufnehmbar und darin in einem Abstützbereich sicherbar ist, und wobei der Anschlussstutzen eine Öffnung, die eine Fluidverbindung zum in die Elementaufnahme mündenden Fluidkanal bildet, sowie eine Dichtungsanordnung aufweist, die die Öffnung gegen das offene Ende des Aufnahmeteils hin abdichtet. Das Aufnahmeteil weist an seiner Innenseite eine zum offenen Ende hin divergierende Einführungsschräge auf, wobei die Dichtungsanordnung durch Dichtringe gebildet ist.

Die US 2009/0050554 A1 beschreibt ein Filtersystem, beispielsweise ein Kraftstofffiltersystem einer Maschine, mit einem Filterelement, mit einem ersten Ende und mit einem zweiten Ende, und mit einer Außen- und Innenseite, wobei eine erste Endkappe an dem ersten Ende angeordnet ist, und mit einer zweiten Endkappe an dem zweiten Ende des Filterelementes. Die zweite Endkappe umfasst eine Fluidführung, die in fluidischer Verbindung mit der Innenseite des Filterelementes ist und einen Fluidauslass bildet. Ein Aufnahmestutzen des Filtersystems weist eine zylindrische Gestalt auf, wodurch zum einen die Montage des Filterelementes in dem Aufnahmestutzen erschwert ist und zum anderen eine dauerhafte Verbindung zwischen Endkappe und Elementaufnahme bei vielfachem Austausch des Filterelementes nicht sicher gegeben ist.

Die US 7 335 300 B1 beschreibt eine Filtervorrichtung für Fluide, insbesondere für Kraftstoffe wie Dieselöl, mit einem eine Längsachse definierenden Filtergehäuse, das Gehäuseanschlüsse als Fluideingang und Fluidausgang aufweist und in dem mindestens ein Filterelement aufnehmbar ist, dessen einen inneren Filterhohlraum umgebendes Filtermedium beim Filtriervorgang durchströmbar ist, wobei das Filterelement an seinem dem Bodenteil des Filtergehäuses zugewandten unteren Ende durch eine Endkappe eingefasst ist, die einen eine Fluidverbindung zum inneren Filterhohlraum bildenden Durchgang aufweist und an einer Elementaufnahme des Filtergehäuses festlegbar ist, wobei die Elementaufnahme einen am Bodenteil des Filtergehäuses befindlichen, zum Filterelement hin offenen Aufnahmestutzen aufweist, in den ein zu einem Gehäuseanschluss führender Fluidkanal mündet, wobei die Endkappe des Filterelementes einen Anschlussstutzen aufweist, der im Aufnahmestutzen aufnehmbar und darin in einem Abstützbereich sicherbar ist, und wobei der Anschlussstutzen eine Öffnung, die eine Fluidverbindung zum in die Elementaufnahme mündenden Fluidkanal bildet, sowie eine Dichtungsanordnung aufweist, die die Öffnung gegen das offene Ende des Aufnahmestutzens hin abdichtet.

Im Hinblick auf diese Problematik stellt sich die Erfindung die Aufgabe, eine Filtervorrichtung zur Verfügung zu stellen, die den in Frage kommenden Anforderungen hinsichtlich des Betriebsverhaltens in besonderem Maße gerecht wird.

Erfindungsgemäß ist diese Aufgabe durch eine Filtervorrichtung gelöst, die die Merkmale des Patentanspruches 1 in seiner Gesamtheit aufweist.

Bei der erfindungsgemäßen Filtervorrichtung für Fluide, insbesondere für Kraftstoffe wie Dieselöl, mit einem eine Längsachse definierenden Filtergehäuse ist vorgesehen, dass das Filtergehäuse Gehäuseanschlüsse als Fluideingang und Fluidausgang aufweist und in dem mindestens ein Filterelement aufgenommen ist, dessen einen inneren Filterhohlraum umgebendes Filtermedium beim Filtriervorgang durchströmbar ist, wobei das Filterelement an seinem dem Bodenteil des Filtergehäuses zugewandten unteren Ende durch eine Endkappe eingefasst ist, die einen eine Fluidverbindung zum inneren Filterhohlraum bildenden Durchgang aufweist und an einer Elementaufnahme des Filtergehäuses festlegbar ist, wobei die Elementaufnahme einen am Bodenteil des Filtergehäuses befindlichen, zum Filterelement hin offenen Aufnahmestutzen aufweist, in den ein zu einem Gehäuseanschluss führender Fluidkanal mündet, wobei die Endkappe des Filterelementes einen Anschlussstutzen aufweist, der im Aufnahmestutzen aufnehmbar und darin in einem Abstützbereich sicherbar ist, und wobei der Anschlussstutzen eine Öffnung, die eine Fluidverbindung zum in die Elementaufnahme mündenden Fluidkanal bildet, sowie eine Dichtungsanordnung aufweist, die die Öffnung gegen das offene Ende des Aufnahmestutzens hin abdichtet, wobei der Aufnahmestutzen an seiner Innenseite eine zum offenen Ende hin divergierende Einführungsschräge aufweist, wobei die Dichtungsanordnung durch Dichtringe gebildet ist, die an der Außenseite des Anschlussstutzens in einem der Länge des Abstützbereiches entsprechendes axialen Abstand voneinander angeordnet sind und den Anschlussstutzen durch Anlage an der Innenseite des Aufnahmestutzens der Elementaufnahme in dieser sichern und wobei der eine Dichtring mit einem größeren Durchmesser versehen ist als der andere Dichtring und sich die konisch nach unten verjüngende Einführungsschräge im eingebauten Zustand des Filterelements gesehen zwischen den beiden Dichtringen erstreckt, die insoweit in Anlage sind mit zylindrischen Wandabschnitten, die sich an die Einführschräge nach oben und unten hin anschließen.

Da der Aufnahmestutzen erfindungsgemäß an seiner Innenseite eine zum offenen Ende hin divergierende Einführungsschräge aufweist, gestaltet sich die Koppelung zwischen Endkappe und Elementaufnahme besonders einfach und sicher.

Dadurch, dass das Filterelement über den Anschlussstutzen der Endkappe über einen Abstützbereich in der Elementaufnahme festgelegt ist, der sich über einen axialen Längenbereich erstreckt, ist zum einen eine einwandfreie Positionierung und Lagesicherung des Filterelements im Filtergehäuse gewährleistet. Zum anderen bildet der Anschlussstutzen in Zusammenwirkung mit dem Aufnahmestutzen der Elementaufnahme über die Öffnung im Anschlussstutzen eine Fluidführung, die den inneren Filterhohlraum mit dem zugeordneten Gehäuseanschluss verbindet, wobei mittels der am Anschlussstutzen befindlichen Dichtungsanordnung ein sicher abgedichteter Fluidweg gebildet ist. Durch Einstecken des Anschlussstutzens in den Aufnahmestutzen der Elementaufnahme kommt daher bei Wechselvorgängen des Filterelementes eine sichere Koppelung zwischen Endkappe des Filterelements und der Elementaufnahme zustande.

Erfindungsgemäß ist die Dichtungsanordnung durch Dichtringe gebildet, die an der Außenseite des Anschlussstutzens in einem die Länge des Abstützbereiches definierenden axialen Abstand voneinander angeordnet sind und den Anschlussstutzen durch Anlage an der Innenseite des Aufnahmestutzens der Elementaufnahme in dieser sichern. Dank dieser Anordnung ist eine sonst übliche Abdichtung zwischen dem äußeren Umfangsrand der Endkappe und der Gehäuseinnenwand nicht erforderlich, so dass eine Dichtungsanordnung entsprechend großen Durchmessers in Wegfall kommen kann und stattdessen Dichtelemente kleineren Durchmessers in Form von O-Ringen als Dichtungen am Anschlussstutzen benutzt werden können, wodurch sich geringere Montagekräfte und geringere Kosten bei gleichzeitig verbesserter Betriebssicherheit ergeben.

Vorzugsweise ist die axiale Länge des Abstützbereiches nicht kleiner als ein Viertel des Durchmessers des Aufnahmestutzens.

Mit besonderem Vorteil kann der Anschlussstutzen der Endkappe an seinem in der Elementaufnahme aufzunehmenden Ende einen geschlossenen Boden aufweisen, wobei sich die zum Fluidkanal führende Öffnung in der Wand des Anschlussstutzens oberhalb dieses Bodens befindet. Dadurch bildet der Anschlussstutzen mit seinem geschlossenen unteren Ende zwischen dem Boden und der in der Wand befindlichen Öffnung einen Sammelraum, in dem Restfluid, das bei einer Entnahme des Filterelements möglicherweise aus dem inneren Filterhohlraum heraus abtropft, verbleibt, so dass sich die Gefahr der Umweltverschmutzung bei Entnahme eines Filterelementes verringert.

Bei besonders bevorzugten Ausführungsbeispielen ist auch der Aufnahmestutzen der Elementaufnahme an seinem unteren Ende durch einen Boden geschlossen, der eine Vertiefung als die tiefste Stelle des Filtergehäuses bildet. Dadurch ist auch im Bodenteil des Filtergehäuses ein Sammelraum für beim Filterwechsel abtropfendes Restfluid oder gegebenenfalls abfallende Schmutzpartikel gebildet, wobei diese Stoffe an der tiefsten Stelle des Gehäuses angesammelt verbleiben, also unterhalb des Fluidkanals, der von der Elementaufnahme zum zugehörigen Gehäuseanschluss führt.

Vorzugsweise ist das Filtermedium des Filterelementes beim Filtriervorgang von seiner äußeren Rohseite her zum inneren, die Reinseite bildenden Filterhohlraum hin durchströmbar, so däss der in den Aufnahmestutzen der Elementaufnahme mündende Fluidkanal zu dem als Fluidausgang dienenden Gehäuseanschluss führt.

Nachstehend ist die Erfindung anhand eines in der Zeichnung dargestellten Ausführungsbeispiels im Einzelnen erläutert. Es zeigen:
- Fig. 1: einen Längsschnitt des hier zu beschreibenden Ausführungsbeispiels der erfindungsgemäßen Filtervorrichtung; und
- Fig. 2: eine vergrößerte, in Längsrichtung aufgeschnitten gezeichnete perspektivische Schrägansicht lediglich des an die Elementaufnahme des Filtergehäuses angrenzenden Teilbereichs des Ausführungsbeispiels.

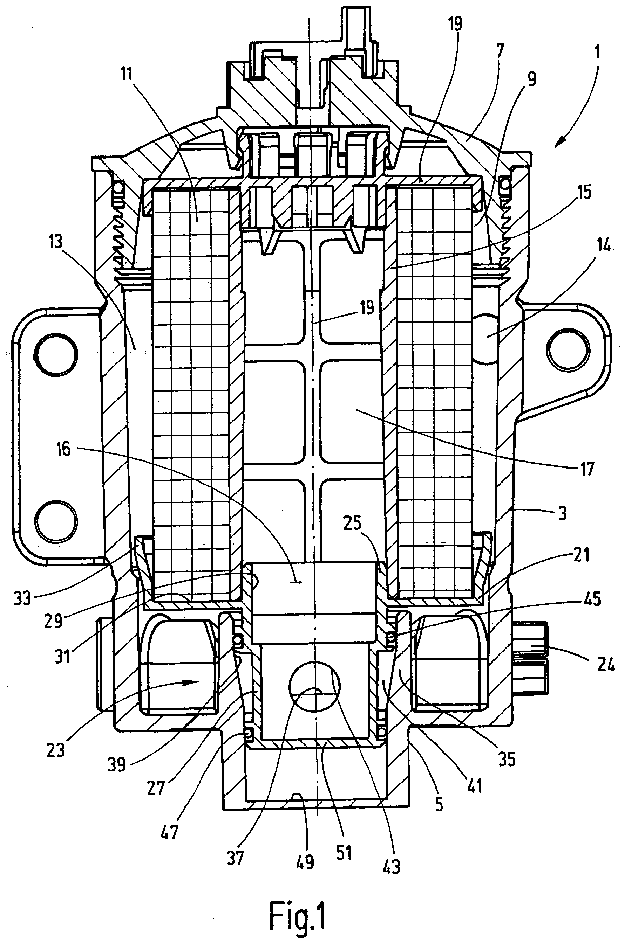

Die Vorrichtung weist ein Filtergehäuse 1 mit einem hohlzylinderförmigen Hauptteil 3 und einem sich an dessen Unterseite anschließenden, geschlossenen Bodenteil 5 auf. Am oberen Ende ist mit dem Hauptteil 3 ein Gehäusedeckel 7 verschraubt, der für Einbau und Ausbau eines Filterelementes 9 abnehmbar ist. Bei dem hier zu beschreibenden Ausführungsbeispiel ist das Filterelement 9 von außen nach innen durchströmbar. Der zwischen der Außenseite des im Gehäuse 1 aufgenommenen Filterelements 9 und der Innenwand des Gehäuses 1 befindliche Zwischenraum bildet daher beim Filtrationsvorgang die Rohseite 13. Ein zur Rohseite 13 hin führender Gehäuseanschluss, der den Fluideingang bildet, ist in Fig. 1 mit 14 bezeichnet. Das Filtermedium 11 des Filterelements 9 ist durch eine zu einem Hohlzylinder geformte Filtermatte gebildet, die ein fluiddurchlässiges Stützrohr 15 umgibt, durch das ein innerer Filterhohlraum 17 gebildet ist, der beim Filtriervorgang die Reinseite 16 bildet, in der sich das abgereinigte Fluid befindet.

In der bei Filterelementen üblichen Weise sind an dessen jeweiligem Ende Endkappen 19 und 21 vorgesehen, die Einfassungen für das Filtermedium 11 sowie das Stützrohr 15 bilden. Die untere Endkappe 21, über die das im Gehäuse 1 in Funktionsposition befindliche Filterelement 9 im Gehäuse 1 festlegbar ist, bildet sowohl das Verankerungselement, mittels dessen das Filterelement 9 in einer Elementaufnahme 23 am Bodenteil 5 des Filtergehäuses 1 verankerbar ist, als auch eine Fluidführungseinrichtung zur Bildung einer Fluidverbindung zwischen dem inneren Filterhohlraum 17 und dem beim vorliegenden Beispiel den Fluidausgang bildenden Gehäuseanschluss 24. Zu diesem Zweck weist die Endkappe 21 einen Anschlussstutzen 27 auf, der einen Durchgang 29 zum inneren Filterhohlraum 17 hin bildet. Der Anschlussstutzen 27 erstreckt sich vom Endkappenboden 31, der eine ebene Auflagefläche für den unteren Rand des Filtermediums 11 bildet, sowohl mit einem Rohrstück 25 axial nach oben in den Filterhohlraum 17 hinein als auch vom Endkappenboden 31 weg axial nach unten, wobei die axiale Länge dieses Teiles beim gezeigten Beispiel größer als der Durchmesser des Rohrstückes 25 ist. An der Außenseite des in den Filterhohlraum 17 ragenden Rohrstückes 25 des Anschlussstutzens 27 liegt das Stützrohr 15 mit seiner Innenseite an. Mit dem äußeren Umfangsrand 33 des Endkappenbodens 31 bildet die Endkappe 21 die äußere Einfassung des Filtermediums 11.

Die Elementaufnahme 23 weist am Bodenteil 5 des Filtergehäuses 1 einen Aufnahmestutzen 35 auf, der am oberen, dem Filterelement 9 zugewandten Ende offen ist und der den Anschlussstutzen 27 des in Funktionsposition befindlichen Filterelements 9 aufnimmt. An seinem unteren Ende ist der Aufnahmestutzen 35 durch ein Bodenteil 49 geschlossen. Oberhalb des Bodenteils 49 mündet in den Aufnahmestutzen 35 der Elementaufnahme 23 ein zum Fluidausgang 24 führender Fluidkanal 37, der sich quer zur Längsachse 19 des Filtergehäuses 1 erstreckt. Der Aufnahmestutzen 35 der Elementaufnahme 23 bildet an seiner Innenseite eine Einführschräge 39, die zum offenen Ende des Aufnahmestutzens 35 hin divergiert und das Einsetzen des Anschlussstutzens 27 in die Elementaufnahme 23 erleichtert. Das im Aufnahmestutzen 35 aufzunehmende Teil des Anschlussstutzens 27 der Endkappe 21 ist im Außendurchmesser derart gestuft, dass zwischen Aufnahmestutzen 35 und Anschlussstutzen 27 ein Fluidraum 41 gebildet ist, in den der Fluidkanal 37 einmündet.

Die axiale Länge des im Aufnahmestutzen 35 aufnehmbaren Teils des Anschlussstutzens 27 entspricht beim gezeigten Beispiel in etwa der Größe des Durchmessers der Öffnung des Aufnahmestutzens 35. In der Wand des Anschlussstutzens 27 befindet sich eine Öffnung 43, die den Innenraum des Anschlussstutzens 27 und damit, über den Durchgang 29, den Filterhohlraum 17 über den Fluidkanal 37 mit dem Fluidausgang 24 verbindet. Mittels des Anschlussstutzens 27 der Endkappe 21 ist somit eine Fluidführung von der im Filterhohlraum 17 befindlichen Reinseite 16 zum Fluidausgang 24 gebildet. Der Fluidraum 41 ist zur Innenseite des Aufnahmestutzens 35 der Elementaufnahme 23 hin mittels Dichtungen 45 und 47 abgedichtet, die sich an der Außenseite des Anschlussstutzens 27 in einem axialen Abstand befinden, so dass für die Abstützung des Anschlussstutzens 27 im Aufnahmestutzen 35 ein Abstützbereich entsprechend großer axialer Länge gebildet ist.

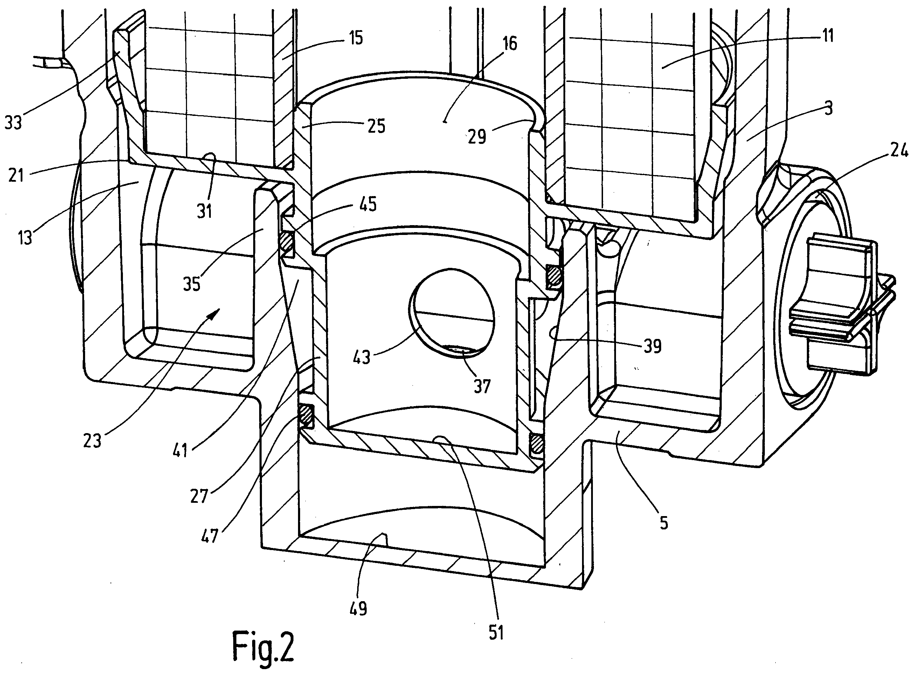

Beim dargestellten Beispiel entspricht die axiale Länge dieses Abstützbereiches in etwa der Hälfte des Durchmessers der Öffnung des Aufnahmestutzens 35. Durch die sich über einen Axialbereich erstreckende Abstützung, dessen Länge auch kleiner oder größer sein kann als die Hälfte des Öffnungsdurchmessers des Aufnahmestutzens 35, ist eine sichere Festlegung des Filterelementes 9 in der Elementaufnahme 23 gewährleistet. Durch die Dichtungen 45, 47 ist gleichzeitig eine Abdichtung zwischen der Reinseite 16, zu der auch der abgedichtete Fluidraum 41 gehört, und der darüberliegenden, im Hauptteil 3 des Gehäuses 1 befindlichen Rohseite 13 gebildet. Dabei ist der Dichtring 45 mit einem größeren Durchmesser versehen als der Dichtring 47 und die in Blickrichtung auf die Fig. 2 gesehen sich konisch nach unten verjüngende Wand 39 (Einführschräge) erstreckt sich im eingebauten Zustand des Filterelements gesehen zwischen den beiden Dichtungen 45 und 47, die insoweit in Anlage sind mit zylindrischen Wandabschnitten, die sich an die Einführschräge 39 nach oben und unten hin anschließen. Dank dieser Anordnung ist eine sonst übliche Abdichtung zwischen dem äußeren Umfangsrand 33 der Endkappe 21 und der Gehäuseinnenwand nicht erforderlich, so dass eine Dichtungsanordnung entsprechend großen Durchmessers in Wegfall kommen kann und stattdessen Dichtelemente kleineren Durchmessers in Form von O-Ringen als Dichtungen 45 und 47 am Anschlussstutzen 27 benutzt werden können, wodurch sich geringere Montagekräfte und geringere Kosten bei gleichzeitig verbesserter Betriebssicherheit ergeben.

Beim hier gezeigten Beispiel bildet das untere Ende des Aufnahmestutzens 35 der Elementaufnahme 23 mit dem geschlossenen Bodenteil 49 die tiefste Stelle am Bodenteil 5 des Filtergehäuses 1. Bei einer Entnahme eines auszutauschenden Filterelements 9 bildet die so gebildete, geschlossene Bodenvertiefung des Gehäuses 1 einen Aufnahmeraum für gegebenenfalls abtropfendes Restfluid oder abfallende Schmutzpartikel. Diese Stoffe verbleiben daher in einer "sicheren Zone" unterhalb des zum Fluidausgang 24 führenden Fluidkanals 37. Der Anschlussstutzen 27 der Endkappe 21 ist an dem dem Filterhohlraum 17 entgegengesetzten unteren Ende ebenfalls durch ein Bodenteil 51 geschlossen. Wie aus den Figuren ersichtlich, befindet sich die den Fluidweg über den Fluidkanal 37 zum Fluidausgang 24 hin fortsetzende Öffnung 43 in der Wand des Anschlussstutzens 27 oberhalb dieses Bodenteils 51, so dass auch innerhalb des Anschlussstutzens 27 ein Aufnahmeraum gebildet ist und Fluidreste, die bei der Entnahme des Filterelements 9 gegebenenfalls aus dem inneren Filterhohlraum 17 heraus abtropfen, innerhalb dieses an der Endkappe 21 gebildeten Raumes verbleiben, so dass bei Herausnahme des Filterelements 9 auch keinerlei Restfluid am insoweit geschlossenen unteren Ende des Filterelements 9 abtropfen und die Umwelt verschmutzen kann. Entgegen der beschriebenen Durchströmungsrichtung lässt sich die Filtervorrichtung, gegebenenfalls mit geringen Umbaumaßnahmen, auch in entgegengesetzter Durchströmungsrichtung betreiben.

## Patentansprüche

1. Filtervorrichtung für Fluide, insbesondere für Kraftstoffe wie Dieselöl, mit einem eine Längsachse (19) definierenden Filtergehäuse (1), das Gehäuseanschlüsse als Fluideingang (14) und Fluidausgang (24) aufweist und in dem mindestens ein Filterelement (9) aufgenommen ist, dessen einen inneren Filterhohlraum umgebendes Filtermedium (11) beim Filtriervorgang durchströmbar ist, wobei das Filterelement (9) an seinem dem Bodenteil (5) des Filtergehäuses (1) zugewandten unteren Ende durch eine Endkappe (21) eingefasst ist, die einen eine Fluidverbindung zum inneren Filterhohlraum (17) bildenden Durchgang (29) aufweist und an einer Elementaufnahme (23) des Filtergehäuses (1) festlegbar ist, wobei die Elementaufnahme (23) einen am Bodenteil (5) des Filtergehäuses (1) befindlichen, zum Filterelement (9) hin offenen Aufnahmestutzen (35) aufweist, in den ein zu einem Gehäuseanschluss (24) führender Fluidkanal (37) mündet, wobei die Endkappe (21) des Filterelementes (9) einen Anschlussstutzen (27) aufweist, der im Aufnahmestutzen (35) aufnehmbar und darin in einem Abstützbereich sicherbar ist, und wobei der Anschlussstutzen (27) eine Öffnung (43), die eine Fluidverbindung zum in die Elementaufnahme (23) mündenden Fluidkanal (37) bildet, sowie eine Dichtungsanordnung (45, 47) aufweist, die die Öffnung (43) gegen das offene Ende des Aufnahmestutzens (35) hin abdichtet, wobei der Aufnahmestutzen (35) an seiner Innenseite eine zum offenen Ende hin divergierende Einführungsschräge (39) aufweist, wobei die Dichtungsanordnung durch Dichtringe (45, 47) gebildet ist, die an der Außenseite des Anschlussstutzens (27) in einem der Länge des Abstützbereiches entsprechenden axialen Abstand voneinander angeordnet sind und den Anschlussstutzen (27) durch Anlage an der Innenseite des Aufnahmestutzens (35) der Elementaufnahme (23) in dieser sichern und wobei der eine Dichtring (45) mit einem größeren Durchmesser versehen ist als der andere Dichtring (47) und sich die konisch nach unten verjüngende Einführungsschräge (39) im eingebauten Zustand des Filterelements (9) gesehen zwischen den beiden Dichtringen (45 und 47) erstreckt, die insoweit in Anlage sind mit zylindrischen Wandabschnitten, die sich an die Einführschräge (39) nach oben und unten hin anschließen.

2. Filtervorrichtung nach Anspruch 1, **dadurch gekennzeichnet, dass** durch die Dichtringe (45, 47) gleichzeitig eine Abdichtung zwischen einer Reinseite (16), zu der auch ein abgedichteter Fluidraum (41) gehört, und einer darüberliegenden, im Hauptteil (3) des Gehäuses (1) befindlichen Rohseite (13) gebildet ist.

3. Filtervorrichtung nach Anspruch 1 oder 2, **dadurch gekennzeichnet, dass** die axiale Länge des Abstützbereiches zumindest einem Viertel des Durchmessers der Öffnung des Anschlussstutzens (27) entspricht.

4. Filtervorrichtung nach einem der vorstehenden Ansprüche, **dadurch gekennzeichnet, dass** der Anschlussstutzen (27) der Endkappe (21) an seinem in der Elementaufnahme (23) aufzunehmenden Ende einen geschlossenen Boden (51) aufweist und dass sich die zum Fluidkanal (37) führende Öffnung (43) in der Wand des Anschlussstutzens (27) oberhalb dieses Bodens (51) befindet.

5. Filtervorrichtung nach einem der vorstehenden Ansprüche, **dadurch gekennzeichnet, dass** der Aufnahmestutzen (35) der Elementaufnahme (23) an seinem unteren Ende durch einen Boden (51) geschlossen ist, der eine Vertiefung als die tiefste Stelle des Filtergehäuses (1) bildet.

6. Filtervorrichtung nach einem der vorstehenden Ansprüche, **dadurch gekennzeichnet, dass** das Filtermedium (11) des Filterelementes (9) beim Filtriervorgang von seiner äußeren Rohseite (13) her zum Inneren, die Reinseite (16) bildenden Filterhohlraum (17) hin durchströmbar ist und dass der in den Aufnahmestutzen (35) der Elementaufnahme (23) mündende Fluidkanal (37) zu dem als Fluidausgang (24) dienenden Gehäuseanschluss führt.

## Claims

1. A filter device for fluids, in particular for fuels such as diesel oil, with a filter housing (1) defining a longitudinal axis (19), which housing has housing ports as fluid inlet (14) and fluid outlet (24) and in which at least one filter element (9) is accommodated, the filter medium (11) of which, surrounding an inner filter cavity, can be flowed through during the filtration process, wherein the filter element (9) is enclosed by an end cap (21) on its lower end facing the bottom part (5) of the filter housing (1), which end cap has a passage (29) forming a fluid connection to the inner filter cavity (17) and can be fixed onto an element retainer (23) of the filter housing (1), wherein the element retainer (23) has a retainer piece (35) located on the bottom part (5) of the filter housing (1), open towards the filter element (9) into which a fluid channel (37) leading to a housing port (24) opens, wherein the end cap (21) of the filter element (9) has a connecting piece (27) which can be accommodated in the retainer piece (35) and can be secured in the latter in a support region, and wherein the connecting piece (27) has an opening (43) which forms a fluid connection to the fluid channel (37) discharging into the element retainer (23), as well as a seal arrangement (45, 47) which seals the opening (43) with respect to the open end of the retainer piece (35), wherein the retainer piece (35) has an insertion slope (39) diverging towards the open end on its inside, wherein the seal arrangement is formed by sealing elements (45, 47) which are arranged on the outside of the connecting piece (27), spaced apart from one another by an axial distance which corresponds to the length of the support region, and which secure the connecting piece (27) in the element retainer (23) by resting it against the inside of the retainer piece (35) of said element retainer (23), and wherein the one sealing ring (45) is provided with a greater diameter than the other sealing ring (47), and, viewed in the installed state of the filter element (9), the insertion slope (39) tapering conically downwards extends between the two sealing rings (45 and 47), which in this respect rest against cylindrical wall sections which close upwards and downwards at the insertion slope (39).

2. The filter device according to claim 1, **characterised in that** a seal is formed simultaneously between a clean side (16), also including a sealed fluid space (41) and an opposing unfiltered side (13) located in the main part (3) of the housing (1), due to the sealing rings (45, 47).

3. The filter device according to claim 1 or 2, **characterised in that** the axial length of the . support region corresponds to at least a quarter of the diameter of the opening of the connecting piece (27).

4. The filter device according to one of the preceding claims, **characterised in that** the connecting piece (27) of the end cap (21) has a closed bottom (51) at its end to be accommodated in the element retainer (23) and that the opening (43) in the wall of the connecting piece (27) leading to the fluid channel (37) is located above this bottom (51).

5. The filter device according to one of the preceding claims, **characterised in that** the retainer piece (35) of the element retainer (23) is closed at its lower end by a bottom (51) which forms a depression as the lowest point of the filter housing (1).

6. The filter device according to one of the preceding claims, **characterised in that**, during the filtration process, flow can take place through the filter medium (11) of the filter element (9) from its outer unfiltered side (13) to the inner filter cavity (17) forming the clean side (16), and that the fluid channel (37) discharging into the retainer piece (35) of the element retainer (23) leads to the housing port serving as the fluid outlet (24).

## Revendications

1. Dispositif de filtration de fluides, notamment de carburants, comme du carburant diesel, comprenant un corps (1) de filtre, qui définit un axe (19) longitudinal, qui a des raccords comme entrée (14) de fluide et sortie (24) de fluide et dans lequel est logé au moins un élément (9) de filtre, dont le milieu (11) filtrant, entourant une cavité intérieure de filtre, est traversé dans l'opération de filtration, l'élément (9) de filtre étant enchâssé, à son extrémité inférieure, tournée vers la partie (5) de fond du corps (1) du filtre, par une coiffe (21) d'extrémité, qui a un passage (29), formant une liaison fluidique vers l'intérieur de la cavité (17) du filtre, et qui peut être fixée à un logement (23) d'élément du corps (1) du filtre, le logement (23) d'élément ayant une tubulure (35) de logement se trouvant à la partie (5) de fond du corps (1) du filtre et ouverte vers l'élément (9) de filtre, tubulure dans laquelle débouche un canal (37) pour du fluide, menant à un raccord (24) du corps, la coiffe (21) d'extrémité de l'élément (9) du filtre ayant une tubulure (27) de raccordement, qui peut être reçue dans la tubulure (35) de logement et y être fixée dans une partie d'appui, et dans lequel la tubulure (27) de raccordement a une ouverture (43), qui forme une liaison fluidique vers le canal (37) pour du fluide débouchant dans le logement (23) d'élément, ainsi qu'un agencement (45, 47) d'étanchéité, qui rend étanche l'ouverture (43) vis-à-vis de l'extrémité ouverte de la tubulure (35) de logement, la tubulure (35) de logement ayant, sur son côté intérieur, un biseau (39) d'introduction divergeant vers l'extrémité ouverte, l'agencement d'étanchéité étant formé par des joints (45, 47), qui sont montés sur le côté extérieur de la tubulure (27) de raccordement à une distance axiale l'un de l'autre correspondant à la longueur de la partie d'appui et fixent la tubulure (27) de raccordement par application sur le côté intérieur de la tubulure (35) du logement (23) d'élément dans celui-ci et dans lequel un joint (45) a un diamètre plus grand que l'autre joint (47) et le biseau (39) d'introduction, se rétrécissant coniquement vers le bas, s'étend, considéré lorsque l'élément (9) de filtre est à l'état monté, entre les deux joints (45 et 47), qui, dans cette mesure, sont en contact avec des parties de paroi cylindriques, qui se raccordent vers le haut et vers le bas au biseau (39) d'introduction.

2. Dispositif de filtration suivant la revendication 1, **caractérisé en ce qu'**il est formé, par les joints (45, 47), en même temps une étanchéité entre un côté (16) propre, auquel appartient également un espace (41) pour du fluide rendu étanche, et un côté (13) brut se trouvant au-dessus dans la partie (3) principale du corps (1).

3. Dispositif de filtration suivant la revendication 1 ou 2, **caractérisé en ce que** la longueur axiale de la partie d'appui correspond au moins à un quart du diamètre de l'ouverture de la tubulure (2) de raccordement.

4. Dispositif de filtration suivant l'une des revendications précédentes, **caractérisé en ce que** la tubulure (27) de raccordement de la coiffe (21) d'extrémité a un fond (51) fermé, à son extrémité recevant le logement (23) de l'élément, et **en ce que** l'ouverture (43), menant au canal (37) pour du fluide, se trouve dans la paroi de la tubulure (27) de raccordement, au-dessus de ce fond (51).

5. Dispositif de filtration suivant l'une des revendications précédentes, **caractérisé en ce que** la tubulure (35) du logement (23) d'élément est fermée à son extrémité inférieure par un fond (51), qui forme une cavité comme point le plus bas du corps (1) du filtre.

6. Dispositif de filtration suivant l'une des revendications précédentes, **caractérisé en ce que** le milieu (11) filtrant de l'élément (9) de filtre est, lors de l'opération de filtration, traversé de son côté (13) brut extérieur à la cavité (17) de filtre intérieur formant le côté (16) propre et **en ce que** le canal (37) pour du fluide, débouchant dans la tubulure (35) du logement (23) d'élément, mène au raccord du corps servant de sortie (24) du fluide.
